# EUROPÄISCHE PATENTSCHRIFT

(11) **EP 1 745 730 B1**
(45) Veröffentlichungstag und Bekanntmachung des Hinweises auf die Patenterteilung: **21.04.2010**
(21) Anmeldenummer: 06014891.3
(22) Anmeldetag: 18.07.2006
(51) Int. Cl.: A47J 45/06

(54) **Kochgeschirr mit Temperaturanzeige**
Cooking system with temperature indicator
Système de cuisson avec temoin de temperature

(30) Priorität: 18.07.2005 CN 200520113972; 25.11.2005 DE 102005056598
(43) Veröffentlichungstag der Anmeldung: 24.01.2007
(73) Patentinhaber: Mingle Instrument GmbH Europe, 47877 Willich (DE)
(72) Erfinder: Ming, Ho Wai House 35, Tai Po N.T. Hong Kong (CN); Bayerl, Rudolf, 47877 Willich (DE)
(74) Vertreter: Lenzing Gerber Stute

(56) Entgegenhaltungen:
- EP-A1- 0 950 368
- WO-A2-2004/008923
- FR-A1- 2 664 148
- GB-A- 1 004 404
- JP-A- 63 311 130
- US-A1- 2003 169 801

## Beschreibung

Die vorliegende Erfindung betrifft ein Kochgeschirr mit den Merkmalen des Oberbegriffs des Anspruchs 1.

Kochgeschirr wird regelmäßig zur Zubereitung von Mahlzeiten benutzt. Um beispielsweise eine gleichmäßige Temperaturverteilung im Boden der Bratpfanne zu gewährleisten, haben die meisten Bratpfannen üblicherweise eine metallische Platte mit einer bestimmten Dicke, die im Boden zwischen der Bratoberfläche und der Unterseite der Pfanne eingebettet ist. Solche Bratpfannen weisen jedoch keine Temperaturanzeige auf, so dass der Benutzer sich vollkommen auf seine Erfahrung verlassen muss, um die wesentlichen Faktoren bei der Zubereitung zu steuern. Diese sind die Zubereitungszeit, die Zeit bis zum Wenden des Lebensmittels und die zugeführte Wärmemenge. Deshalb kann ein zu geringes oder zu starkes Erhitzen des Lebensmittels bei der Zubereitung vorkommen.

Aus der deutschen Patentanmeldung DE 197 17 260 A1 ist eine Bratpfanne bekannt, bei der in den Pfannengriff ein Digitalthermometer mit einer Anzeige integriert ist. Der Messfühler ist bei der bekannten Pfanne im Boden oder an einer anderen geeigneten Stelle angeordnet und überträgt seine Signale an das Digitalthermometer. Eine konkrete Ausführung des Pfannenbodens, des Messfühlers und der Verbindung zwischen dem Messfühler und dem Digitalthermometer ist nicht offenbart. Soweit diese Druckschrift Anregungen für eine technische Lösung gibt, sind diese nicht für den täglichen Gebrauch geeignet, denn es werden keinerlei Vorkehrungen für den Schutz der Anzeigeeinheit bei der Reinigung mit heißem, lösungsmittelhaltigem und alkalischem oder saurem Wasser beschrieben.

Das Dokument WO2004/008923 zeigt eine Bratpfanne mit einer in den Handgriff eingesetzten Anzeigeeinheit. Die Anzeigeeinheit ist abnehmbar, um sie bei Reinigungsvorgängen vor aggressiven Reinigungsmedien zu schützen. Die Kontaktierung erfolgt durch stiftförmige Kontakte, die beim Einsetzen eine Verbindung zu dem im Pfannenkörper angeordneten Temperatursensor herstellen.

Insbesondere die pfannenseitigen Kontakte, die den Renigungsmedien ungeschützt ausgesetzt sind, neigen zur Ausbildung einer Oxidschicht, die die Kontaktierung beim Einsetzen der Anzeigeeinheit nach der Reinigung unzuverlässig macht.

Es ist deshalb Aufgabe der vorliegenden Erfindung, ein Kochgeschirr mit einem Thermometer für die Temperatur des Bodens zu schaffen, das im täglichen Gebrauch die erforderliche Robustheit, insbesondere bei der Reinigung mit flüssigen Medien aufweist.

Diese Aufgabe wird von einem Kochgeschirr mit den Merkmalen des Anspruchs 1 gelöst.

Weil die Anzeigeeinheit ohne Werkzeug lösbar mit dem Handgriff verbunden ist, können die elektronischen Bauelemente gegenüber den Einflüssen im täglichen Gebrauch, beispielsweise beim Abwaschen, hinreichend geschützt werden. Insbesondere kann die

Anzeigeeinheit separat von dem Kochgeschirr gereinigt werden.

Dabei kann der im Kochgeschirr fest angeordnete Sensor von der Bauart eines Thermoelements sein, welches hoch temperaturfest ist und vollständig gekapselt werden kann, ohne die Funktion zu beeinträchtigen.

Weitere bevorzugte Merkmale ergeben sich aus den abhängigen Patentansprüchen.

Nachfolgend wird eine Bratpfanne als ein Ausführungsbeispiel der Erfindung anhand der Zeichnung beschrieben. Es zeigen:
- Fig. 1:: einen Griff einer erfindungsgemäßen Bratpfanne mit eingesetzter Anzeigeeinheit in einem Querschnitt von der Seite;
- Fig. 2:: den Griff aus Fig. 1 in einer Draufsicht; sowie
- Fig. 3:: den Griff aus Fig. 1 mit abgenommener Anzeigeeinheit.

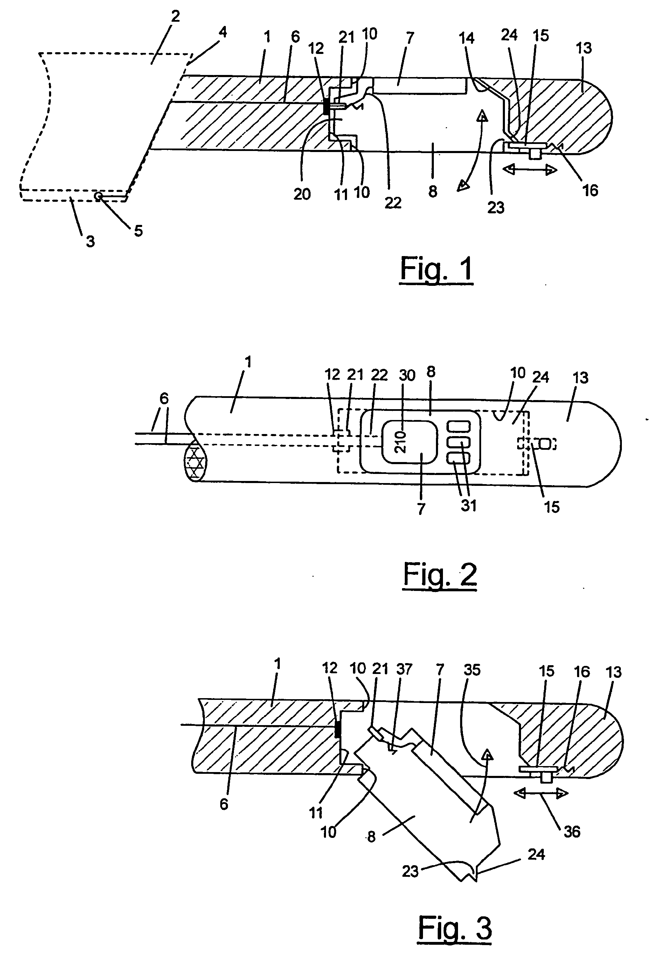

Die Figur 1 zeigt in einem Querschnitt von der Seite einen Handgriff eines erfindungsgemäßen Kochgeschirrs, hier am Beispiel einer Bratpfanne. Der Handgriff 1 ist an seinem linken Ende an einen Grundkörper 2 der Bratpfanne befestigt, die einen Pfannenboden 3 und einen umlaufenden Rand 4 aufweist. Im Pfannenboden 3 ist ein Temperatursensor 5 angeordnet, der über elektrische Verbindungsleitungen 6 mit einer Anzeige 7 verbundne ist. Die Anzeige 7 ist in einer lösbar mit dem Handgriff 1 verbundenen Anzeigeeinheit 8 angeordnet.

Im Einzelnen weist der Handgriff 1 einen in der Figur 1 nach oben und unten offenen Durchbruch 10 auf, der zur Aufnahme der Anzeigeeinheit 8 eingerichtet ist. Dazu ist an der Wandung, die dem Grundkörper 2 zugewandt ist, eine Ausnehmung 11 vorgesehen, die in ihrem Wandbereich insgesamt zwei Kontaktplatten 12 trägt. In dem einen freien Ende 13 zugewandten Wandbereich verjüngt sich der Durchbruch 10 von unten nach oben hin durch Ausbildung von Anlageflächen 14. Weiter ist in diesem Bereich dein manuell betätigbares Verriegelungselement 15 vorgesehen, welches mittels einer Feder 16 in eine Verriegelungsstellung vorgespannt ist.

Die Anzeigeeinheit 8 ist an ihrer Oberseite ebenso wie an ihrer Unterseite glattflächig und in einer Ebene mit der äußeren Oberfläche des Handgriffs 1 ausgestaltet. Der Ausnehmung 11 zugewandt ist ein Vorsprung 20, der federbelastete Kontaktstifte 21 zur Kontaktierung der Kontaktplatte 12 trägt. Von den Kontaktstiften 21 ist eine elektrische Verbindungsleitung 22 zu der Anzeige 7 vorgesehen.

An ihrer gegenüberliegenden Seite trägt die Anzeigeeinheit 8 eine Rastnase 23, die an ihrer in Figur 1 oben angeordneten Seite eine Einführungsschräge 24 aufweist, während die Unterseite im Wesentlichen senkrecht auf der Seitenwandung der Anzeigeeinheit 8 steht. Die Rastnase 23 ist so eingerichtet, dass sie von dem Verriegelungselement 15 hintergriffen werden kann.

Die Figur 2 zeigt den in Figur 1 dargestellten Handgriff in einer Draufsicht. Gleiche Bauteile sind mit gleichen Bezugsziffern versehen.

In der Draufsicht ist erkennbar, dass die Anzeigeeinheit 8 mit der Anzeige 7 in dem Durchbruch 10 auch seitlich begrenzt angeordnet ist. Der Handgriff 1 ist vom Material her durchgehend einstückig gefertigt und umgibt die Anzeigeeinheit 8 bündig und glattflächig. Die Anzeige 7 ist in der Draufsicht gemäß Figur 2 von der Oberseite her ablesbar. In diesem Ausführungsbeispiel ist eine Temperaturanzeige 30 vorgesehen, die die Temperatur des Pfannenbodens 3 mittels Temperatursensor 5 in Grad Celsius anzeigt. Verschiedene Betriebszustände wie z. B. eine Maximaltemperatur, eine Minimaltemperatur oder auch eine Zubereitungsdauer können über Drucktasten 31 eingestellt werden.

Die Figur 3 zeigt weiter den Handgriff aus Figur 1 und Figur 2 in einem Querschnitt von der Seite mit gelöster Anzeigeeinheit 8.

Die Anzeigeeinheit 8 wird zunächst mit ihrem die Kontaktstifte 21 tragenden Ende in den Durchbruch 10 eingeführt, wobei das genannte Ende der Anzeigeeinheit 8 in die Ausnehmung 11 hineingeführt wird. Die Anzeigeeinheit 8 wird dann in Richtung des Pfeils 35 auf den Handgriff 1 zu verschwenkt, so dass das die Rastnase 23 tragende Ende sich dem Verriegelungselement 15 nähert. Die Anzeige 7 ist dabei der Ausnehmung 10 zugewandt.

Der sich ergebende Schwenkvorgang führt einerseits dazu, dass die Anzeigeeinheit 8 mit ihrer Rastnase 23 das Verriegelungselement 15 berührt. Wird dann weiter manuell Kraft ausgeübt, so wird das Verriegelungselement 15 in Richtung des Doppelpfeils 36 nach rechts verschoben, so dass die Schraubenfeder 16 komprimiert wird. Dabei gleitet das Verriegelungselement 15 entlang der Einführungsschräge 24, bis diese Einführungsschräge das Verriegelungselement 15 wieder freigibt. Die Druckfeder 16 drängt dann das Verriegelungselement 15 hinter die Rastnase 23 und verriegelt so die Anzeigeeinheit 8 im Handgriff 1. Die Anzeigeeinheit 8 erreicht damit die in Figur 1 dargestellte Position.

Während des Einführungsvorgangs gleiten andererseits die Kontaktstifte 21 auf den Kontaktflächen 12 unter dem Druck der den Kontaktstiften 21 zugeordneten Schraubenfedern 37. Diese Relativbewegung der Kontaktstifte 21 auf den Kontaktflächen 12 sorgt für eine Reinigung der Oberfläche beider Komponenten, die deswegen vorteilhaft ist, weil insbesondere die Kontaktflächen 12 durch die Einwirkung der üblichen Reinigungsmittel im Haushalt eine schlecht leitende, im allgemeinen oxidische Oberflächenschicht aufweisen können. Diese Oberflächenschicht wird während des Einsetzens der Anzeigeeinheit 8 mechanisch zumindest soweit entfernt, dass ein guter Kontakt zwischen den Kontaktplatten 12 und den Kontaktstiften 21 sichergestellt ist.

Das Entfernen der Anzeigeeinheit 8 erfolgt in umgekehrter Reihenfolge, wobei das Rastelement 15 manuell gegen die Kraft der Schraubenfeder 16 verlagert werden muss, um die Rastnase 23 freizugeben und zu ermöglichen, dass die Anzeigeeinheit 8 nach unten aus der Ausnehmung 10 heraus geschwenkt werden kann. Die Anzeigeeinheit 8 kann dann abgenommen werden und, falls erforderlich, manuell gereinigt werden. Das Kochgeschirr kann dann ohne die Anzeigeeinheit 8 einer im allgemeinen erforderlichen intensiven Reinigung unterzogen werden, beispielsweise in einer Spülmaschine.

Es kann auch vorgesehen sein, dass ein Verriegelungselement in der Anzeigeeinheit 8 angeordnet ist und mit einer Rastnase oder einer Hinterschneidung des Handgriffs 1 zusammenwirkt.

Die elektrischen Bauelemente, die unlösbar mit dem Kochgeschirr verbunden sind, nämlich der Temperatursensor 5, die Anschlussleitungen 6 und die Kontaktplatten 12, sind so robust und hermetisch geschlossen ausführbar, dass sie bei einem intensiven Reinigungsvorgang nicht beschädigt werden.

Insgesamt wird mit der insoweit beschriebenen Erfindung ein Kochgeschirr zur Verfügung gestellt, welches in praxisgerechter Weise eine Anzeigeeinheit für die Temperatur der Garfläche oder Zubereitungsfläche, insbesondere eines Pfannenbodens, aufweist und welches dank der Abnehmbarkeit der Anzeigeeinheit 8 in der Praxis keinerlei Probleme bei der Reinigung bereitet, selbst wenn das Kochgeschirr mit starken Anhaftungen beladen in einer Spülmaschine gereinigt werden muss.

Entsprechendes gilt für eine Ausführungsform der Erfindung bei Kochtöpfen, Dampfdrucktöpfen und dergleichen.

## Patentansprüche

1. Kochgeschirr mit einem Grundkörper (2) und einem an dem Grundkörper (2) angeordneten Handgriff (1), wobei der Handgriff (1) eine Temperaturanzeigeeinheit (8) aufweist, welche in Abhängigkeit von einem Temperatursensor (5) die Temperatur in einem für die Zubereitung von Lebensmitteln wesentlichen Teil (3) des Grundkörpers (2) anzeigt, wobei die Temperaturanzeigeeinheit (8) in einer ohne Werkzeug lösbaren Weise mit dem Handgriff (1) verbunden ist, **dadurch gekennzeichnet,** dassfederbelastete Kontaktelemente (21) vorgesehen sind, die einen Kontakt zwischen der Anzeigeeinheit (8) und elektrischen Leitungen (6) in dem Handgriff (1) herstellen und dass die Kontaktelemente (21) beim Einsetzen der Anzeigeeinheit (8) in den Handgriff (1) eine reibende Relativbewegung zu zugeordneten Kontaktplatten (12) des Handgriffs (1) ausführen.

2. Kochgeschirr nach Anspruch 1, **dadurch gekennzeichnet, dass** der Temperatursensor (5) in einer Installationsbohrung einer metallischen Platte im Boden (3) des Kochgeschirrs angeordnet ist.

3. Kochgeschirr nach einem der vorhergehenden Ansprüche, **dadurch gekennzeichnet, dass** der Grundkörper (2) als Brat- oder Grillpfanne ausgebildet ist.

4. Kochgeschirr nach einem der vorhergehenden Ansprüche, **dadurch gekennzeichnet, dass** die Anzeigeeinheit (8) eine Rastnase (23) zur Verriegelung mit einem Verriegelungselement (15) des Handgriffs (1) aufweist oder dass der Handgriff (1) eine Rastnase (23) oder eine Hinterschneidung zur Verriegelung mit einem Verriegelungselement (15) der Anzeigeeinheit (8) aufweist.

## Claims

1. Cookware having a base body (2) and a handle (1) arranged on the base body (2), wherein the handle (1) has a temperature display unit (8) which subject to a temperature sensor (5) displays the temperature in a part (3) of the base body (2) which is essential for preparing food, wherein the temperature display unit (8) is connected to the handle (1) in a way that it can be detached without using any tools, **characterised in that** spring-loaded contact elements (21) are provided which produce a contact between the display unit (8) and electric wires (6) in the handle (1), and **in that** the contact elements (21) perform a frictional relative movement to allocated contact plates (12) of the handle (1) when the display unit (8) is inserted into the handle (1).

2. Cookware according to Claim 1, **characterised in that** the temperature sensor (5) is arranged in an installation drilled hole of a metallic plate in the base (3) of the cookware.

3. Cookware according to either of the preceding claims, **characterised in that** the base body (2) is designed as a frying or grill pan.

4. Cookware according to any one of the preceding claims, **characterised in that** the display unit (8) has a lug (23) for latching to a latching element (15) of the handle (1), or **in that** the handle (1) has a lug (23) or an undercut for latching to a latching element (15) of the display unit (8).

## Revendications

1. Système de cuisson comprenant un corps de base (2) et une poignée (1) agencée sur le corps de base (2), dans lequel la poignée (1) comprend une unité d'affichage de température (8) qui affiche, en fonction d'un capteur de température (5), la température dans une partie (3) du corps de base (2) essentielle pour la préparation de produits alimentaires, dans lequel l'unité d'affichage de température (8) est reliée à la poignée (1) de manière à pouvoir être détachée sans outil,
**caractérisé en ce que** des éléments de contact (21) chargés par ressort sont prévus pour établir un contact entre l'unité d'affichage (8) et des lignes électriques (6) dans la poignée (1), et **en ce que** les éléments de contact (21) exécutent, lors de la mise en place de l'unité d'affichage (8) dans la poignée (1), un mouvement relatif à friction par rapport aux plaquettes de contact (12) associées de la poignée (1).

2. Système de cuisson selon la revendication 1,
**caractérisé en ce que** le capteur de température (5) est agencé dans un perçage d'installation d'une plaque métallique dans le fond (3) du système de cuisson.

3. Système de cuisson selon l'une des revendications précédentes,
**caractérisé en ce que** le corps de base (2) est réalisé sous forme de poêle à rôtir ou de poêle à griller.

4. Système de cuisson selon l'une des revendications précédentes,
**caractérisé en ce que** l'unité d'affichage (8) comprend un ergot d'enclenchement (23) destiné au verrouillage avec un élément de verrouillage (15) de la poignée (1), ou **en ce que** la poignée (1) comprend un ergot d'enclenchement (23) ou une contre-dépouille destiné(e) au verrouillage avec un élément de verrouillage (15) de l'unité d'affichage (8).
